# EUROPEAN PATENT APPLICATION

(11) **EP 4 203 423 A1**
(43) Date of publication of application: **28.06.2023**
(21) Application number: 21871483.0
(22) Date of filing: 22.09.2021
(51) Int. Cl.: H04L 45/28

(54) **METHOD FOR SELECTING PACKET TRANSMISSION PATH, AND DEVICE AND MEDIUM**

(30) Priority: 23.09.2020 CN 202011010255
(71) Applicant: Huawei Technologies Co., Ltd., Shenzhen, Guangdong 518129 (CN)
(72) Inventor: FAN, Pingwei, Shenzhen, Guangdong 518129 (CN); LI, Dacheng, Shenzhen, Guangdong 518129 (CN); LU, Bingshun, Shenzhen, Guangdong 518129 (CN); CHENG, Ming, Shenzhen, Guangdong 518129 (CN)
(74) Representative: Goddar, Heinz J.
(86) International application number: PCT/CN2021/119561
(87) International publication number: WO 2022/063113

(57) **Abstract**

Embodiments of this application disclose a method for selecting a packet sending path, including: An initiator device generates a first packet; and the initiator device sends the first packet to a reflector device through a first path, where the first packet includes first indication information, and the first indication information indicates the reflector device to select a path to send a second packet to the initiator device. This application further provides a device and a medium. Because the first packet sent by the initiator device carries the first indication information indicating the first path, after obtaining the first packet, the reflector can select a reverse path based on the first indication information, so that the reverse path of the reflector device is controlled, false detection on a path is avoided, and accuracy of path detection is improved.

## Description

This application claims priority to Chinese Patent Application No. 202011010255.8, filed with the China National Intellectual Property Administration on September 23, 2020 and entitled "METHOD FOR SELECTING PACKET SENDING PATH, DEVICE, AND MEDIUM", which is incorporated herein by reference in its entirety.

### TECHNICAL FIELD

This application relates to the communication field, and in particular, to a method for selecting a packet sending path, a device, and a medium.

### BACKGROUND

Seamless bidirectional forwarding detection (seamless bidirectional forwarding detection, SBFD) is a simplified mechanism of bidirectional forwarding detection (bidirectional forwarding detection, BFD). The SBFD simplifies a state machine of the BFD, shortens negotiation time, improves flexibility of an entire network, and can support segment routing (segment routing, SR) tunnel detection. The SBFD includes an initiator device and a reflector device. Before link detection, the initiator device and the reflector device each send an SBFD control packet (SBFD Control Packet) to the other to notify information such as SBFD discriminators (Discriminators). During the link detection, the initiator device actively sends a control packet. The reflector device loops back the packet based on route deployment. The initiator device determines an SBFD state based on a reflected packet.

In an actual working process, a transmission tunnel between the initiator device and the reflector includes a plurality of paths. It is assumed that the initiator device sends a control packet to the reflector device through a first path. In a normal working state, the reflector device also loops back the packet to the initiator by using the first path as a reflection path, so that the initiator can detect transmission quality of the first path for receiving and sending packets.

However, in a conventional technology, when a reflector loops back a packet, if a routing device in a link of a first path is faulty, the looped-back packet of a service is switched to a second path. As a result, a reflection path of a control packet is inconsistent with a forward detection path of the control packet. Transmission on the forward detection path is performed through the first path, but a reflected packet is transmitted through the second path, and the path for receiving the packet and the path for sending the packet are inconsistent. In this case, problems such as false SBFD detection occurs.

### SUMMARY

Embodiments of this application provide a method for selecting a packet sending path, a device, and a medium, to flexibly select a transmission path in a transmission path detection process. Therefore, this helps to improve accuracy of path detection.

According to a first aspect, an embodiment of this application provides a method for selecting a packet sending path, including: An initiator device generates a first packet; and the initiator device sends the first packet to a reflector device through a first path, where the first packet includes first indication information. Optionally, the initiator device encapsulates the first indication information in an extension field of a control packet part of the first packet, and the first indication information indicates the reflector device to select a path to send a second packet to the initiator device.

In this embodiment, because the first packet sent by the initiator carries the first indication information, after obtaining the first packet, the reflector can select, based on the first indication information, a path to send the second packet to the initiator device, to implement control on a reverse path. In other words, the reverse path can be flexibly selected, and accuracy of path detection can be improved.

Optionally, the first indication information includes first identification information; and if the first identification information identifies that the first path is a primary path from the initiator device to the reflector device, the first indication information indicates the reflector device to select a primary path from the reflector device to the initiator device to send the second packet; or if the first identification information identifies that the first path is a backup path from the initiator device to the reflector device, the first indication information indicates the reflector device to select a backup path from the reflector device to the initiator device to send the second packet.

In this embodiment, the initiator device notifies, by using the first identification information in the first indication information, the reflector device whether the current first path for sending the first packet is the primary path or the backup path, so that the reflector device selects a reverse path based on an indication of the first identification information.

Alternatively, the first indication information includes second identification information, and the second identification information indicates the reflector device to select a primary path from the reflector device to the initiator device to forward the second packet; or the second identifier indicates the reflector device to select a backup path from the reflector device to the initiator device to send the second packet.

In this embodiment, the initiator device directly indicates, to the reflector device by using the second identification information in the first indication information, that a target path is the primary path or the backup path, so that the reflector device sends a response packet to the initiator device based on the path indicated by the second identification information. The initiator device successfully controls the reflector device to select a packet sending path.

Alternatively, the first indication information includes third identification information; the third identification information identifies the first path, and the first indication information indicates the reflector device to select a second path from the reflector device to the initiator device to send the second packet; and the first path and the second path are bidirectional co-routed paths.

In this embodiment, the first path and the second path are bidirectional co-routed paths, and the first path and the second path pass through a same node, but in opposite directions. The third identification information indicates, by identifying the first path, the reflector device to select the second path from the reflector device to the initiator device to send the second packet, so that the reflector device determines the target reverse path based on the identifier.

Optionally, the first indication information further includes a binding segment identifier binding SID, and the binding SID is for directing the reflector to send the second packet to the initiator device.

In this embodiment, there are a plurality of transmission tunnels between the reflector device and the initiator device, and each transmission tunnel includes a plurality of transmission paths. The reflector device may know, by using the binding SID in the first indication information, a tunnel to which the reverse path belongs. The reflector device stores a correspondence between the binding SID and a label stack of a path corresponding to a current tunnel, and each label stack records a segment identifier (segment identifier, SID) of one or more nodes on the path. The reflector device may determine a label stack of the reverse path based on the binding SID.

Optionally, the first packet is a BFD packet or an SBFD packet.

In this embodiment, optionally, the solutions provided in this application may be applied to an SR scenario. In the SR scenario, the first packet may be a BFD packet or an SBFD packet. Optionally, the solutions provided in this application may further be applied to a non-inter-area scenario, an end-to-end segment routing traffic-eng (The end-to-end segment routing traffic-eng, E2E SRTE), an inter-area scenario, a seamless segment routing (seamless segment routing, Seamless SR) scenario, and the like.

Optionally, the first indication information is carried in a packet payload (payload) part of the BFD packet, or the first indication information is carried in a payload part of the SBFD packet.

In this embodiment, a packet payload payload of the BFD packet or the SBFD packet is used as a specific implementation of extending a BFD/SBFD packet, so that the first indication information can be carried in extended information of the first packet. Therefore, the first packet can indicate the reflector device, and no additional message needs to be sent. This improves message sending efficiency.

Alternatively, the first indication information is carried in control packet extended data (Ext Data) of the BFD packet or the SBFD packet.

In this embodiment, in an optional implementation, the first indication information is carried in the control packet extended Ext Data of the BFD packet or the SBFD packet, so that the first packet can indicate the reflector device, and no additional message needs to be sent. This improves message sending efficiency.

Optionally, the method further includes: When the initiator device does not receive the second packet after sending the first packet to the reflector device, the initiator device determines that a fault occurs when a service packet is sent to the reflector device through the first path.

In this embodiment, when the initiator device does not receive the second packet after sending the first packet to the reflector device, it indicates that the first packet cannot be successfully transmitted through the first path, and the initiator device determines that a fault occurs when the service packet is sent to the reflector device through the first path.

Alternatively, the method further includes: The initiator device receives the second packet sent by the reflector device; and the initiator device detects, based on the second packet, a transmission status of sending a service packet to the reflector device through the first path.

In this embodiment, both the first path for sending the first packet and the target path for receiving the second packet are selected by using the method for selecting a packet sending path in this application, so that a transmission path is controlled. The second packet detects a transmission status of the first path by using the response packet of the first packet, so that transmission quality is detected. This avoids false detection.

Optionally, the method further includes: The initiator device records a first time point after sending the first packet; the initiator device records a second time point at which the second packet is received; and when determining that a difference between the first time point and the second time point is less than a threshold, the initiator device determines that transmission quality of the first path for sending the service packet to the reflector device meets a service requirement; or when determining that a difference between the first time point and the second time point is greater than a threshold, the initiator device determines that transmission quality of the first path for sending the service packet to the reflector device does not meet a service requirement.

In this embodiment, the initiator device determines, based on duration of receiving the second packet after the first packet is sent, whether the transmission quality of the first path for sending the service packet to the reflector device meets the service requirement. In addition, both the transmission path for sending the packet and the transmission path for receiving the packet are selected by using the method for selecting a packet sending path in this application, so that the transmission quality is detected. This avoids false detection.

Optionally, the method further includes: when the initiator device determines that the fault occurs when the service packet is sent to the reflector device through the first path, or when the initiator device determines that the transmission quality of the first path for sending the service packet to the reflector device does not meet the service requirement, the initiator device sends a service packet to the reflector device through a third path, where the third path and the first path are different paths.

In this embodiment, when determining that the fault occurs when the service packet is sent to the reflector device through the first path, or when determining that the transmission quality of the first path for sending the service packet to the reflector device does not meet the service requirement, the initiator device switches a sending path, to ensure normal packet transmission and ensure that the transmission path is detected.

Optionally, the second packet is a response packet of the first packet, or the second packet is a loopback packet of the first packet.

In this embodiment, after obtaining a packet sent by the initiator device, the reflector device loops back the packet to the initiator device, or sends a response packet to the initiator device. In this way, the second packet is sent.

According to a second aspect, an embodiment of this application provides a method for selecting a packet sending path, including: A reflector device receives a first packet sent by an initiator device through a first path, where the first packet includes first indication information; the reflector device selects a target path based on an indication of the first indication information; and the reflector device sends a second packet to the initiator device through the target path.

In this embodiment, because the first packet sent by the initiator carries the first indication information, after obtaining the first packet, the reflector can select, based on the first indication information, a path to send the second packet to the initiator device, to implement control on a reverse path. In other words, the reverse path can be flexibly selected. False detection caused by reverse link switching is avoided, and detection accuracy is improved.

Optionally, the first indication information includes first identification information, and the first identification information identifies that the first path is a primary path from the initiator device to the reflector device; and that the reflector device selects a target path based on an indication of the first indication information includes: The reflector device selects a primary path from the reflector device to the initiator device as the target path based on the first identification information. Alternatively, the first identification information identifies that the first path is a backup path from the initiator device to the reflector device; and that the reflector device selects, based on an indication of the first indication information, a path to send the second packet to the initiator device includes: The reflector device selects a backup path from the reflector device to the initiator device as the target path based on the first identification information.

In this embodiment, the initiator device notifies, by using the first identification information in the first indication information, the reflector device whether the first path for sending the first packet is the primary path or the backup path, so that the reflector device selects a reverse path based on an indication of the first identification information.

Alternatively, the first indication information includes second identification information, and the second identification information indicates the reflector device to select a primary path or a backup path from the reflector device to the initiator device to forward the second packet; and that the reflector device selects a target path based on an indication of the first indication information includes: The reflector device selects the primary path or the backup path from the reflector device to the initiator device as the target path based on the second identification information.

In this embodiment, the initiator device directly indicates, to the reflector device by using the second identification information in the first indication information, that the target path is the primary path or the backup path, so that the reflector device sends a response packet to the initiator device based on the path indicated by the second identification information. The initiator device successfully controls the reflector device to select a packet sending path.

Alternatively, the first indication information includes third identification information, and the third identification information identifies the first path; and that the reflector device selects a target path based on an indication of the first indication information includes: The reflector device selects a second path as the target path based on the third identification information, where the first path and the second path are bidirectional co-routed paths.

In this embodiment, the first path and the second path are bidirectional co-routed paths, and the first path and the second path pass through a same node, but in opposite directions. The third identification information indicates, by identifying the first path, the reflector device to select the second path from the reflector device to the initiator device to send the second packet, so that the reflector device determines the target reverse path based on the identifier.

Optionally, the first indication information further includes a binding segment identifier binding SID, and the method further includes: The reflector device determines a label stack of a corresponding selected path based on the binding SID; and the reflector device sends the second packet based on the label stack, where a packet header of the second packet includes the label stack.

In this embodiment, there are a plurality of transmission tunnels between the reflector device and the initiator device, and each transmission tunnel includes a plurality of transmission paths. The reflector device may know, by using the binding SID in the first indication information, a tunnel to which the reverse path belongs. The reflector device stores a correspondence between the binding SID and a label stack of a path corresponding to a current tunnel, and each label stack records an SID of one or more nodes on the path. The reflector device may determine a label stack of the reverse path based on the binding SID.

Optionally, that the reflector device selects a primary path from the reflector device to the initiator device as the target path based on the first identification information includes: The reflector device determines a primary label stack in the binding segment identifier binding SID based on the first identification information, where the primary label stack is one of a plurality of label stacks in the binding SID, and the primary label stack includes an identifier ID of a routing node of the primary path. Alternatively, that the reflector device selects a backup path from the reflector device to the initiator device as the target path based on the first identification information includes: The reflector device determines a backup label stack in the binding segment identifier binding SID based on the first identification information, where the backup label stack is one of a plurality of label stacks in the binding SID, and the backup label stack includes an identifier ID of a routing node of the backup path.

In this embodiment, the reflector device obtains the label stack of the reverse path based on the binding SID and the indication of the first identification information, so that the second packet can be sent on the reverse path based on the label stack. In this way, the reflector device selects a sending path.

According to a third aspect, an embodiment of this application provides a network device, configured to perform the method according to any one of the first aspect or the optional designs of the first aspect. Specifically, the network device includes a unit configured to perform the method according to any one of the first aspect or the optional designs of the first aspect, or the network device includes a unit configured to perform the method according to any one of the second aspect or the optional designs of the second aspect.

According to a fourth aspect, an embodiment of this application provides a network device, applied to a network system including a plurality of network devices. The network device includes a processor and a network interface. The network interface is configured to receive and send packets. The processor is configured to perform the method according to any one of the first aspect or the possible designs of the first aspect; or the processor is configured to perform the method according to any one of the second aspect or the possible designs of the second aspect.

Optionally, the network device further includes a memory, and the memory may be configured to store instructions or program code. The processor is configured to invoke the instructions or the program code in the memory to perform the method according to any one of the first aspect or the possible designs of the first aspect; or the processor is configured to invoke the instructions or the program code in the memory to perform the method according to any one of the second aspect or the possible designs of the second aspect.

According to a fifth aspect, an embodiment of this application provides a packet processing system, where the system includes the network devices provided in the foregoing aspects. For example, the system includes the initiator device and the reflector device in the foregoing aspects.

According to a sixth aspect, an embodiment of this application provides a computer-readable storage medium, including instructions, where when the instructions are run on a computer device, the computer device is enabled to perform the method according to any one of the first aspect, the optional implementations of the first aspect, and the optional implementations of the second aspect.

According to a seventh aspect, an embodiment of this application provides a computer program product including computer instructions, where when the computer program product is run on a network device, the network device is enabled to perform the method according to any one of the optional implementations of the first aspect and the optional implementations of the second aspect.

According to an eighth aspect, an embodiment of this application provides a chip, including a memory and a processor. The memory is configured to store instructions or program code. The processor is configured to invoke the instructions or the program code from the memory and run the instructions or the program code, to perform the method according to any one of the first aspect or the possible designs of the first aspect; or the processor performs the method according to any one of the second aspect or the possible designs of the second aspect.

In a possible design, the chip includes only the processor, and the processor is configured to read and execute instructions or program code stored in a memory. When the instructions or the program code are/is executed, the processor performs the method according to any one of the first aspect or the possible designs of the first aspect, or performs the method according to any one of the second aspect or the possible designs of the second aspect.

### BRIEF DESCRIPTION OF DRAWINGS

FIG. 1 is a schematic diagram of an application scenario of a method for selecting a packet sending path according to an embodiment of this application;
FIG. 2a is a schematic diagram of an application scenario of a method for selecting a packet sending path according to an embodiment of this application;
FIG. 2b is a schematic diagram of an embodiment of a method for selecting a packet sending path according to an embodiment of this application;
FIG. 3 is a schematic diagram of another embodiment of a method for selecting a packet sending path according to an embodiment of this application;
FIG. 4 is a schematic diagram of another embodiment of a method for selecting a packet sending path according to an embodiment of this application;
FIG. 5 is a schematic diagram of a method for selecting a packet sending path according to an embodiment of this application;
FIG. 6 is a schematic diagram of a packet encapsulation manner in a method for selecting a packet sending path according to an embodiment of this application;
FIG. 7 is a schematic diagram of another packet encapsulation manner in a method for selecting a packet sending path according to an embodiment of this application;
FIG. 8 is a schematic diagram of another packet encapsulation manner in a method for selecting a packet sending path according to an embodiment of this application;
FIG. 9 is a schematic diagram of another packet encapsulation manner in a method for selecting a packet sending path according to an embodiment of this application;
FIG. 10 is a schematic diagram of a device according to an embodiment of this application;
FIG. 11 is a schematic diagram of another device according to an embodiment of this application;
FIG. 12 is a schematic diagram of an initiator device according to an embodiment of this application; and
FIG. 13 is a schematic diagram of a reflector device according to an embodiment of this application.

### DESCRIPTION OF EMBODIMENTS

Embodiments of the present invention provide a method for selecting a packet sending path, a device, and a medium, to flexibly select a transmission path in a transmission path detection process. Therefore, this helps to improve accuracy of path detection.

To make a person skilled in the art understand the solutions in this application better, the following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In the specification, claims, and accompanying drawings of this application, the terms "first", "second", "third", "fourth", and the like (if existent) are intended to distinguish between similar objects but do not necessarily indicate a specific order or sequence. It should be understood that data termed in such a way is interchangeable in proper circumstances so that embodiments described herein can be implemented in other orders than the order illustrated or described herein. In addition, the terms "include" and "have" and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

SBFD includes an initiator device and a reflector device. Before link detection, the initiator device and the reflector device each send an SBFD control packet (SBFD Control Packet) to the other to notify information such as SBFD discriminators (Discriminators). During the link detection, the initiator device actively sends a control packet. The reflector device loops back the packet based on route deployment. The initiator device determines an SBFD state based on a reflected packet.

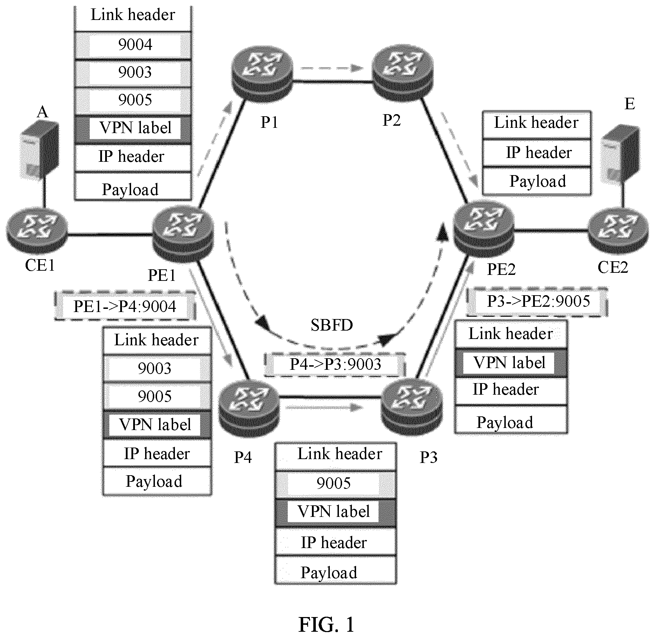

First, a working scenario and an architecture of the SBFD are described. As shown in FIG. 1, a transmission tunnel between an initiator device and a reflector includes a plurality of paths. Optionally, the transmission tunnel is specifically a segment routing-multiprotocol label switching traffic engineering tunnel (segment routing-MPLS traffic engineering tunnel, SR-TE Tunnel). The plurality of paths included in the SR-TE Tunnel include at least two channels: a primary segment routing-multiprotocol label switching traffic engineering label switched path SR-TE LSP and a backup SR-TE LSP. As shown in FIG. 1, nodes included in the primary SR-TE LSP are sequentially PE1->P4->P3->PE2, and structures of PE1, P4, P3, and PE2 are the same. PE1, P4, P3, and PE2 may be provider edges (provider edges, PEs). For example, a label stack of each of PE1, P4, P3, and PE2 is {9004, 9003, 9005}. When the initiator device sends a packet whose destination is the reflector device, and when the packet is in PE1, an outbound interface is found based on 9004 recorded in the first layer in the label stack and the packet is sent to the node P4. The node P4 removes the first layer of label to obtain the second layer of label, namely, 9003. Then, the node sends the packet to the node P3 based on the label 9003. The node P3 obtains the third layer of label, namely, 9005, after removing the second layer of label, namely, 9003, and the node P3 sends the packet to the node PE2 based on the label 9005, so that the packet is transmitted on the first path.

As shown in FIG. 1, nodes included in the backup SR-TE LSP are sequentially PE1->P1->P2->PE2, and a working manner of the backup SR-TE LSP is the same as that of the primary SR-TE LSP. Details are not described herein again. When a link or a P device on the primary SR-TE LSP is faulty, SBFD for the primary SR-TE LSP rapidly detects the fault and notifies to switch data traffic of a service to the backup SR-TE LSP.

In the SBFD, in a normal working state, for a packet sent by the initiator device through the primary SR-TE LSP, the reflector device also loops back the packet to the initiator by using a reverse path corresponding to the primary SR-TE LSP as a reflection path. For example, a first path and a second path are bidirectional co-routed paths, and pass through a same node but in opposite directions. After the initiator device sends the packet to the reflector device through the first path, the reflector device loops back the packet or sends a response packet to the initiator device through the second path. In this way, the initiator can detect transmission quality of the primary SR-TE LSP for receiving and sending the packets.

However, when the reflector loops back the packet, if a routing device in a link on the primary SR-TE LSP is faulty, the looped-back packet of a service is switched to another path. As a result, a reflection path of a control packet is inconsistent with a forward detection path of the control packet. Because the returned packet is returned through another path, the fault on the primary path cannot be detected, and the primary path is still for forwarding. As a result, packet loss occurs. In this case, false SBFD detection occurs.

Currently, there is no ideal solution to a problem of transmission path control during transmission path detection in the SBFD.

In view of this, embodiments of this application provide a method for selecting a packet sending path. First indication information is carried in a packet of an initiator, so that a reflector can determine a reverse path based on the first indication information. For ease of understanding, the following describes in detail the solutions in embodiments of this application with reference to the accompanying drawings.

It should be first noted that, a communication tunnel needs to be first established before communication between an initiator device and a reflector device. After the tunnel and a transmission path in the tunnel are determined, the method for selecting a packet sending path provided in embodiments of this application can be subsequently performed.

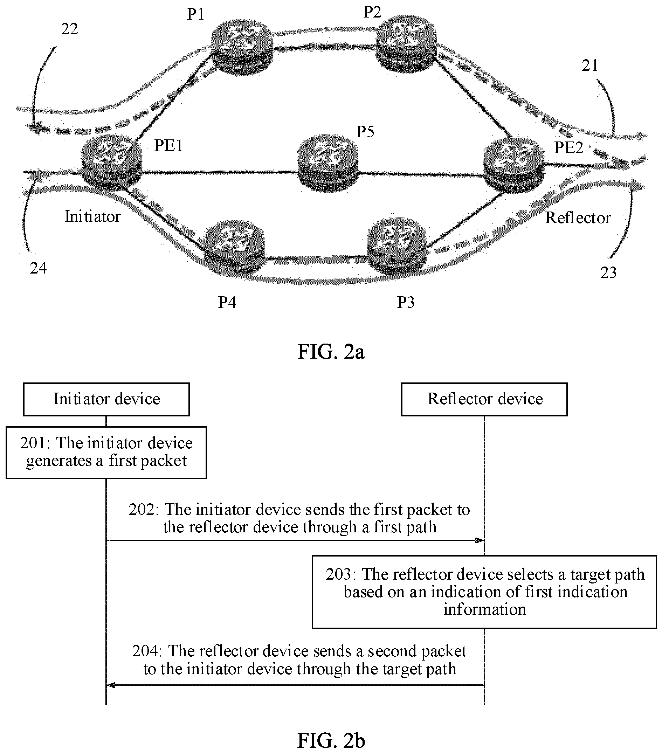

Refer to FIG. 2a. A traffic engineering tunnel (traffic engineering tunnel, TE TUNNEL) to a reflector device PE2 is first established on an initiator device PE1. Further, a primary traffic engineering label switched path (traffic engineering label switched path, TE LSP) and a backup traffic engineering label switched path in the TE tunnel are established. Optionally, the TE LSP is generated and data is forwarded by using the segment routing (segment routing, SR) protocol. Optionally, the reflector device PE2 is responsible for collecting a network topology and reporting the network topology to a controller through intermediate system-to-intermediate system (intermediate system-to-intermediate system, IS-IS) flooding. The controller calculates a label path of the primary LSP and a label path of the backup LSP by using the collected topology information, and delivers path information to a third-party adapter. The third-party adapter delivers the path information of the primary LSP and the backup LSP to an ingress node, namely, the initiator device PE1, to obtain a forward primary TE LSP and a forward backup TE LSP.

A tunnel to the initiator device PE1 is established on the reflector device PE2. A binding SID is configured on the reflector device PE2 (which is an ingress node of the reverse tunnel) for the tunnel. One binding SID corresponds to a label stack of an SR-TE tunnel. The reflector device establishes a primary TE LSP and a backup TE LSP that are respectively co-routed with the forward primary TE LSP and the forward backup TE LSP.

In the foregoing process, as shown in FIG. 2a, paths established between the initiator device PE1 and the reflector device PE2 include:
a primary path 21 from the initiator device PE1 to the reflector device PE2 and a primary path 22 from the reflector device PE2 to the initiator device PE 1, where the primary path 21 from the initiator device PE 1 to the reflector device PE2 and the primary path 22 from the reflector device PE2 to the initiator device PE1 are bidirectional co-routed paths; and
a backup path 23 from the initiator device PE1 to the reflector device PE2 and a backup path 24 from the reflector device PE2 to the initiator device PE1, where the backup path 23 from the initiator device PE1 to the reflector device PE2 and the backup path 24 from the reflector device PE2 to the initiator device PE1 are bidirectional co-routed paths.

Refer to FIG. 2b. Based on the system architecture shown in FIG. 2a, Embodiment 1 of the method for selecting a packet sending path according to embodiments of this application includes the following steps.

201: An initiator device generates a first packet.

In this embodiment, optionally, the first packet is a BFD packet or an SBFD packet, and the first packet includes first indication information. Preferably, the first indication information is carried in a packet payload (payload) part of the BFD packet, or is carried in a payload part of the SBFD packet. Alternatively, the first indication information is carried in control packet extended Ext Data of the BFD packet or the SBFD packet. The first indication information indicates a reflector device to select a path to send a second packet to the initiator device, where the second packet is a response packet of the first packet.

Optionally, the first packet includes a control packet part, and the initiator device encapsulates the first indication information in an extension field of the control packet part of the first packet.

202: The initiator device sends the first packet to the reflector device through a first path.

In this embodiment, the first path is a signal transmission path between the initiator device and the reflector device. Optionally, the first path may be an SR-TE LSP between the initiator device and the reflector device.

203: The reflector device selects a target path based on an indication of the first indication information.

In this embodiment, the first packet carries the first indication information, so that the reflector device can obtain the first indication information from the obtained packet. Optionally, the first indication information is encapsulated in the control packet part of the first packet. In this case, the reflector device obtains the first indication information from the extension field of the control packet part of the first packet.

There are a plurality of transmission paths between the initiator device and the reflector device. The reflector device cannot know a path to be selected as a reverse path of reflection. However, in this embodiment of this application, the reflector device may determine, based on the indication of the first indication information, to send the second packet to the initiator device by using the target path as the reverse path, where the second packet is the response packet of the first packet.

It should be noted that, when the reflector generates the second packet based on the first packet, where the first packet is an SBFD control packet (SBFD Control Packet) in an SBFD scenario, the reflector device generates, based on the first packet, the second packet according to a preset rule of SBFD after obtaining the first packet. For a specific conversion manner, refer to a specific implementation of the SBFD in a conventional technology. Details are not described herein.

204: The reflector device sends the second packet to the initiator device through the target path.

In this embodiment, the reflector device determines the target path based on the first indication information, and generates the second packet based on the first packet. In this case, the reflector device may send the second packet to the initiator device through the target path.

It should be further noted that, the first indication information carried in the first packet indicates the target path by using carried identification information. Optionally, the identification information may indicate the target path to the reflector device in a plurality of manners. Specifically, specific indication manners of the identification information may include the following three manners: 1. The identification information indicates that the path used by the initiator device to send a first message to the reflector device is a primary path or a backup path. In this case, the reflector device selects, based on the path used by the initiator device to send the first message, a primary path or a backup path as the target reverse path according to preset execution logic of the reflector device. 2. The identification information directly indicates to the reflector device that the target path is a primary path or a backup path. In this case, the reflector device does not need to preset execution logic, and directly uses the primary path or the backup path indicated by the identification information as the reverse path. 3. The identification information indicates a path, and the reflector device sends the second packet to the initiator device by using a path indicated by the identification information as the reverse path. For ease of understanding, the following describes the three cases in detail.

1. The identification information indicates that the path used by the initiator device to send the first message to the reflector device is the primary path or the backup path.

A specific implementation of this solution is as follows. The first indication information includes first identification information, to indicate the reflector device to select the target path. The first identification information identifies that the first path is the primary path from the initiator device to the reflector device. Alternatively, the first identification information identifies that the first path is the backup path from the initiator device to the reflector device. In this case, the first indication information indicates the reflector device to select the backup path to send the second packet.

In this embodiment, there are two types of paths between the initiator and the reflector: the primary path and the backup path. In a normal case, transmission is performed through the primary path. When the primary path is faulty, transmission is performed through the backup path. Therefore, when sending the first packet to the reflector device, the initiator device notifies, by using the first indication information, the reflector device that the current first path for sending the first packet is the primary path or the backup path. For example, the initiator device encapsulates 1 in the extension field of the control packet part of the first packet, to indicate that the current first path is the primary path; or encapsulates 0, to indicate that the current first path is the backup path.

The reflector device selects, based on the indication of the first identification information, the primary path or the backup path as the target reverse path. Therefore, in the foregoing manner, the initiator device successfully controls the reflector device to select the packet sending path.

For example, as shown in FIG. 2a, the first identification information identifies that the path used by the initiator device to send the first message to the reflector device is the primary path 21 from the initiator device PE1 to the reflector device PE2. In this case, the reflector device selects, based on the indication of the first identification information, the primary path 22 from the reflector device PE2 to the initiator device PE1 to send the second packet to the initiator device. If the first identification information identifies that the path used by the initiator device to send the first message to the reflector device is the backup path 23 from the initiator device PE1 to the reflector device PE2, the reflector device selects, based on the indication of the first identification information, the backup path 24 from the reflector device PE2 to the initiator device PE1 to send the second packet to the initiator device.

2. The identification information directly indicates to the reflector device that the target path is the primary path or the backup path.

A specific implementation of this solution is as follows. The first indication information includes second identification information, to indicate the reflector device to select the target path. The second identification information indicates the reflector device to select a primary path from the reflector device to the initiator device to forward the second packet; or the second identifier indicates the reflector device to select a backup path from the reflector device to the initiator device to send the second packet.

In this embodiment, there are two types of paths between the initiator and the reflector: the primary path and the backup path. In a normal case, transmission is performed through the primary path. When the primary path is faulty, transmission is performed through the backup path. In this case, the reflector device does not need to preset execution logic, and directly uses the primary path or the backup path indicated by the identification information as the reverse path. For example, the initiator device encapsulates 1 in the extension field of the control packet part of the first packet, to be specific, indicates the reflector device to use the primary path as the target path; or encapsulates 0, to be specific, indicates the reflector device to use the backup path as the target path.

In this case, the reflector device does not need to make a selection, and directly selects the primary path or the backup path as the target reverse path based on the indication of the second identification information. Therefore, in the foregoing manner, the initiator device successfully controls the reflector device to select the packet sending path.

For example, as shown in FIG. 2a, if the second identification information indicates the primary path 22 from the reflector device PE2 to the initiator device PE1, the reflector device directly sends the second packet to the initiator device through the primary path 22 from the reflector device PE2 to the initiator device PE1. If the second identification information indicates the backup path 24 from the reflector device PE2 to the initiator device PE1, the reflector device directly sends the second packet to the initiator device through the backup path 24 from the reflector device PE2 to the initiator device PE1.

3. The identification information indicates the path, and the reflector device sends the second packet to the initiator device by using the path indicated by the identification information as the reverse path.

A specific implementation of this solution is as follows. The first indication information includes third identification information, to indicate the reflector device to select the target path. The third identification information identifies the first path.

In this embodiment, the first path and a second path are bidirectional co-routed paths, and pass through a same node, but in opposite directions. The third identification information indicates, by identifying the first path, the reflector device to select the second path from the reflector device to the initiator device to send the second packet, so that the reflector device determines the target reverse path based on the identifier.

For example, as shown in FIG. 2a, first identification information identifies that the path used by the initiator device to send the first message to the reflector device is the primary path 21 from the initiator device PE1 to the reflector device PE2. In this case, optionally, the reflector device selects, based on the indication of the first identification information, the primary path 22 from the reflector device PE2 to the initiator device PE1 to send the second packet to the initiator device, or the reflector device may select, based on the indication of the first identification information, the primary path 22 from the reflector device PE2 to the initiator device PE1 to send the second packet to the initiator device. Alternatively, if the first identification information identifies that the path used by the initiator device to send the first message to the reflector device is the backup path 23 from the initiator device PE1 to the reflector device PE2. In this case, optionally, the reflector device selects, based on the indication of the first identification information, the backup path 24 from the reflector device PE2 to the initiator device PE1 to send the second packet to the initiator device, or the reflector device may select, based on the indication of the first identification information, the primary path 22 from the reflector device PE2 to the initiator device PE1 to send the second packet to the initiator device.

The method for selecting a packet sending path provided in this embodiment includes: The initiator device generates the first packet; the initiator device sends the first packet to the reflector device through the first path; the reflector device selects the target path based on the indication of the first indication information; and the reflector device sends the second packet to the initiator device through the target path, where the second packet is the response packet of the first packet. Because the first packet sent by the initiator carries the first indication information indicating the target path, after obtaining the first packet, the reflector can obtain the reverse path based on the first indication information, to ensure that transmission paths for receiving and sending are both preset paths. This avoids false detection and improves detection accuracy.

It should be noted that the technical solutions provided in embodiments of this application may be applied to an SR scenario. Optionally, the technical solutions may further be applied to a non-inter-area scenario, an E2E SRTE inter-area scenario, a seamless SR scenario, and the like. This is not limited in embodiments of this application.

For ease of understanding, the following uses the SR scenario as an example to describe specific implementations of embodiments of this application in more detail.

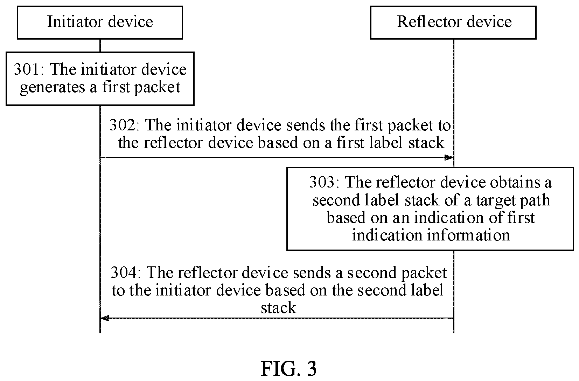

As shown in FIG. 3, Embodiment 2 of the method for selecting a packet sending path according to embodiments of this application includes the following steps.

301: An initiator device generates a first packet.

In this embodiment, when generating the first packet, the initiator encapsulates a first label stack in a packet header part of the first packet. The first label stack includes SIDs of nodes that the first path passes through from the initiator device to a reflector device.

In a specific working process, the packet is sent from the initiator device, and reaches the reflector device through the first path. The packet needs to pass through a plurality of nodes along the path. Each node may be a provider edge (provider edge, PE). The first label stack records an SID of one or more nodes that the first path passes through, so that the node can determine an address of a next node based on the record in the first label stack, and therefore the packet is successfully sent to the reflector device through the first path.

Further, first indication information of the first packet includes a binding segment identifier binding SID, and the binding SID is for directing the reflector to send a second packet to the initiator device.

302: The initiator device sends the first packet to the reflector device based on the first label stack.

In this embodiment, based on the first label stack recorded in a service packet part, the first packet is sequentially sent by each node on the first path, and reaches the reflector device through the first path.

303: The reflector device obtains a second label stack of a target path based on an indication of the first indication information.

In this embodiment, the first indication information further includes the binding segment identifier binding SID. There are a plurality of transmission tunnels between the reflector device and the initiator device, and each transmission tunnel includes a plurality of signal transmission paths. The reflector device may know, by using the binding SID in the first indication information, a tunnel to which a reverse path belongs. Further, the binding SID records label stacks of nodes that all paths in the current tunnel pass through, and each label stack records an SID of one or more nodes that the path passes through.

In the three manners described in Embodiment 1, the reflector device may obtain, based on identification information, the second label stack of the target path from a plurality of label stacks recorded in the binding SID.

For example, the identification information indicates that the path used by the initiator device to send a first message to the reflector device is a primary path or a backup path. In this case, in step 303, the reflector device determines a primary label stack in the binding segment identifier binding SID based on first identification information. The primary label stack is one of the plurality of label stacks in the binding SID, and includes an identifier ID of a routing node of the primary path. Alternatively, the reflector device determines a backup label stack in the binding segment identifier binding SID based on first identification information. The backup label stack is one of the plurality of label stacks in the binding SID, and includes an SID of one or more nodes on the backup path.

304: The reflector device sends the second packet to the initiator device based on the second label stack.

In this embodiment, preferably, the path identified by the first label stack and a path identified by the second label stack are bidirectional co-routed paths. Nodes on a transmission path of the first packet on the first path are PE1->P4->P3->PE2, and the first label stack is (9004, 9003, 9005). The node PE1 sends the first packet to the node P4 based on the first layer of label, namely, 9004. The node P4 sends the first packet to the node P3 based on the second layer of label, namely, 9003. The node P3 sends the first packet to the node PE2 based on the third layer of label, namely, 9005. In this way, the service packet part in the first packet is removed, and a control packet part is sent to the reflector device. During return, the reflector device obtains the second label stack in the manner in step 303. The second label stack is encapsulated in a header part of the second packet, so that the second packet can be sent to the initiator device along the target path. A transmission path of the second packet on the first path is PE2->P3->P4->PE1, and the second label stack is (9005, 9003, 9004). In this way, in a same manner as the foregoing, the reflector device sends the second packet to the initiator device on a reverse co-routed path of the first path based on the second label stack.

In this embodiment, when sending the first packet to the reflector device, the initiator device directs, by using the binding segment identifier binding SID, the reflector to send the second packet to the initiator device. Therefore, the reflector device can determine the label stack of the reverse path based on the binding SID and the identification information, and send the response packet to the initiator device based on the label stack. In this way, the initiator device controls the sending path of the response packet.

It should be noted that, after sending the first packet to the reflector device through the first path, the initiator device needs to determine transmission quality of the first path depending on whether the initiator device receives the response packet (namely, the second packet) fed back by the reflector device. Two different processing manners are included depending on whether the second packet is received. For ease of understanding, the following describes the two cases in detail.

1. The initiator device does not receive the second packet after sending the first packet to the reflector device.

In this embodiment, when the initiator device does not receive the second packet after sending the first packet to the reflector device, the initiator device determines that a fault occurs when a service packet is sent to the reflector device through the first path.

2. The initiator device receives the second packet after sending the first packet to the reflector device.

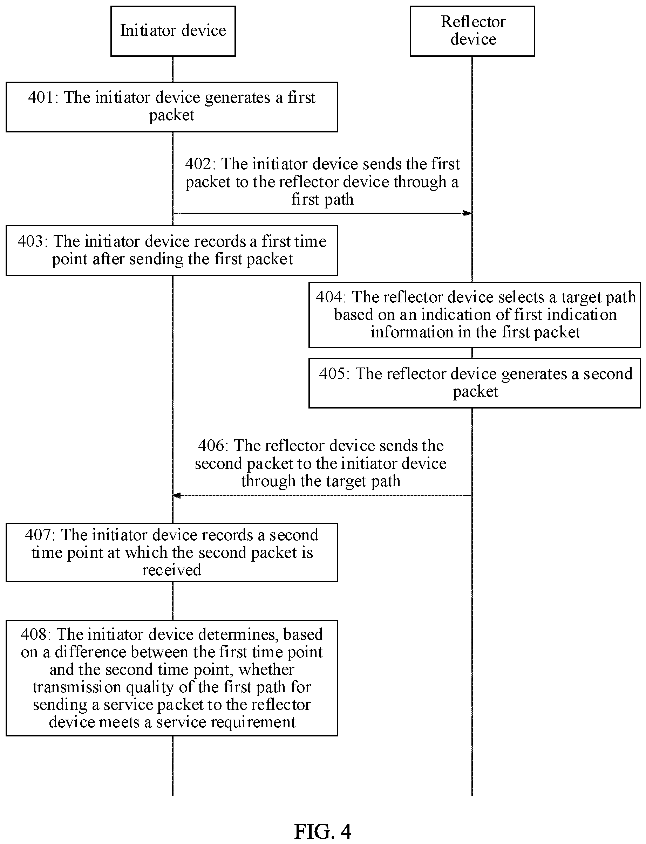

In this embodiment, when the initiator device receives the second packet after sending the first packet to the reflector device, the initiator device detects, based on the second packet, a transmission status of sending a service packet to the reflector device through the first path. Refer to FIG. 4. Embodiment 3 of the method for selecting a packet sending path according to embodiments of this application includes the following steps.

401: An initiator device generates a first packet.

In this embodiment, for this step, refer to step 201 or 301. Further, a control packet part of the first packet further includes discriminators (discriminators), and the discriminators identify the first packet.

402: The initiator device sends the first packet to a reflector device through a first path.

In this embodiment, for this step, refer to step 202 or 302. Details are not described herein again.

403: The initiator device records a first time point after sending the first packet.

In this embodiment, detection performed by the initiator on a transmission path mainly depends on duration of returning a response packet after a packet is sent. Therefore, after sending the first packet, the initiator device needs to record the time point at which the first packet is sent.

404: The reflector device selects a target path based on an indication of first indication information in the first packet.

In this embodiment, for a specific implementation in which the reflector device selects the target path based on the indication of the first indication information in the first packet, refer to the descriptions in the foregoing embodiments. Details are not described herein again.

405: The reflector device generates a second packet.

In this embodiment, for a specific manner in which the reflector device generates the second packet, refer to the descriptions in the foregoing embodiments. It should be noted that the second packet herein further includes the discriminators carried in the first packet, so that the initiator device can determine, based on the discriminators, that the second packet is a response message of the first packet.

406: The reflector device sends the second packet to the initiator device through the target path.

In this embodiment, for a specific implementation in which the reflector device sends the second packet to the initiator device through the target path, refer to the descriptions in the foregoing embodiments. Details are not described herein again.

407: The initiator device records a second time point at which the second packet is received.

In this embodiment, the initiator device determines, based on the discriminators, that the second packet is a packet sent by the reflector device after the reflector device obtains the first packet. In this way, the second time point at which the second packet is obtained is recorded.

408: The initiator device determines, based on a difference between the first time point and the second time point, whether transmission quality of the first path for sending the service packet to the reflector device meets a service requirement.

In this embodiment, a specific determining manner of the initiator device is as follows.

When determining that the difference between the first time point and the second time point is less than a threshold, the initiator device determines that the transmission quality of the first path for sending the service packet to the reflector device meets the service requirement.

When determining that the difference between the first time point and the second time point is greater than a threshold, the initiator device determines that the transmission quality of the first path for sending the service packet to the reflector device does not meet the service requirement.

It should be noted that a value of the threshold may be set by a person skilled in the art based on an actual requirement. This is not limited in this embodiment of this application.

In this embodiment, the initiator device determines, based on duration of receiving the second packet after the first packet is sent, whether the transmission quality of the first path for sending the service packet to the reflector device meets the service requirement. In addition, both the transmission path for sending the packet and the transmission path for receiving the packet are selected by using the method for selecting a packet sending path in this application, so that the transmission quality is detected. This avoids false detection.

It should be noted that, in the foregoing working process, when determining that the fault occurs when the service packet is sent to the reflector device through the first path, or when determining that the transmission quality of the first path for sending the service packet to the reflector device does not meet the service requirement, the initiator device needs to perform the following step:
The initiator device sends a service packet to the reflector device through a third path. The third path and the first path are different paths. In this way, a problem that the transmission status of the first path cannot meet the requirement is overcome. After sending the service packet to the reflector device through the third path, the initiator device replaces the original first path with the third path. For a subsequent working step, refer to the descriptions of the foregoing embodiments. Details are not described herein again.

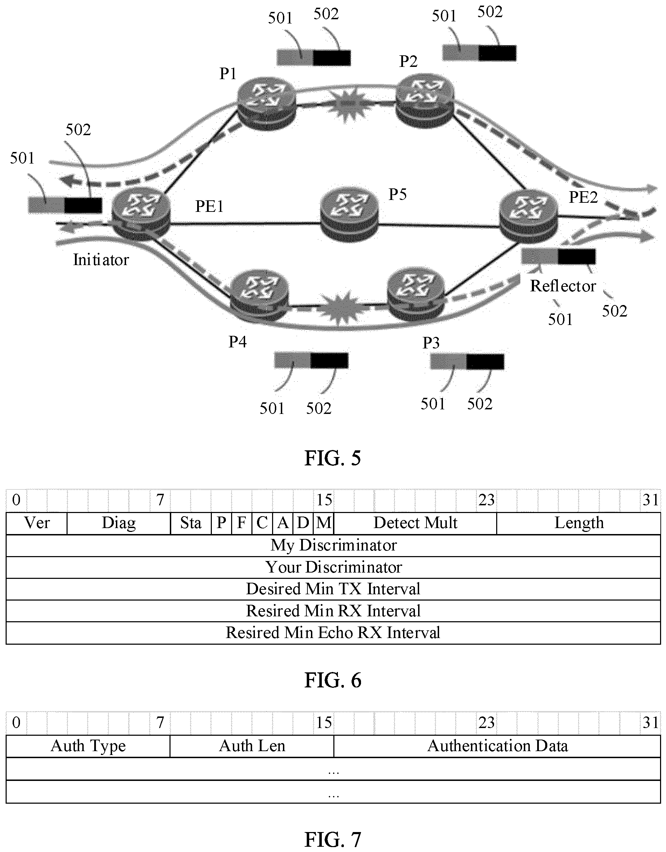

It should be noted that, as shown in FIG. 5, in a method in a conventional technology, there are a plurality of transmission paths between an initiator device and a reflector device. No matter which path is for transmitting data, only a BFD control packet 501 is transmitted. An innovation point of this application is that an extended packet part 502 is added to the BFD control packet 501. The extended packet part 502 carries first indication information, so that after obtaining the packet, the reflector device can obtain the first indication information by using the extended packet part 502, to determine a reverse path of a packet. In this way, a working process of selecting a packet sending path is implemented.

It should be noted that the solutions provided in this application are used in a BFD scenario, and the BFD protocol supports extension of a packet format. Encapsulation of the BFD control packet varies based on a scenario. An original BFD control packet includes two parts: a mandatory part and an optional authentication field. A format of the authentication field varies based on an authentication type.

In the solutions provided in embodiments of this application, an extended type length value (extended type length value, TLV) part is added to the BFD control packet, and the TLV part is filled with information based on a requirement, and is encapsulated in a TLV manner. With reference to the accompanying drawings of this specification, the following describes in detail a specific encapsulation manner of the control packet part of the first packet in embodiments of this application.

### 1. Format of the mandatory part (mandatory part) of the BFD control packet

Refer to FIG. 7. Each line of the mandatory part of the BFD control packet includes 32 characters, namely, four bytes. Characters 0 to 7 represent the first byte, characters 7 to 15 represent the second byte, characters 15 to 23 represent the third byte, and characters 23 to 31 represent the fourth byte.

Further, as shown in FIG. 6, the mandatory part of the BFD control packet includes six lines of content.

In the first line, the first byte records a version number (version, Ver) and a diagnostic type field (diagnostic, diag) of the current control packet. The second byte records a current BFD session state (State, Sta), Poll (P), Final (F), Control Plane Independent (C), Authentication Present (A), Demand (D), and Multipoint (M). The third byte records a detection multiple (Detect Mult). The fourth byte records a length Length of the BFD control packet.

In the second line, four bytes all record a local identifier My Discriminator, namely, the discriminator of the initiator device described in embodiments of this application.

In the third line, four bytes all record a remote identifier Your Discriminator, namely, the discriminator of the reflector device described in embodiments of this application.

It should be noted that, in embodiments of this application, discriminators in the first packet sent by the initiator device include My Discriminator and Your Discriminator. In this case, a local end is an initiator, and a remote end is a reflector. When the reflector device obtains the discriminators from the first packet and encapsulates the second packet, a local end is the reflector, and a remote end is the initiator. Therefore, when encapsulating the second packet, the reflector device needs to interchange the obtained discriminators, and then obtains the second packet through encapsulation.

The fourth line indicates a desired minimum packet sending interval Desired Min TX Interval.

The fifth line indicates a required minimum packet receiving interval Required Min RX Interval.

The sixth line indicates a required minimum echo packet receiving interval Required Min Echo RX Interval.

### 2. Format of the optional authentication part of the BFD control packet

Refer to FIG. 7. Each line of the optional authentication part of the BFD control packet also includes 32 characters, namely, four bytes. Characters 0 to 7 represent the first byte, characters 7 to 15 represent the second byte, characters 15 to 23 represent the third byte, and characters 23 to 31 represent the fourth byte.

Further, as shown in FIG. 7, the first byte in the first line of the optional authentication part of the BFD control packet records an authentication type Auth Type. The second byte records a length Auth Len of the authentication part. The third byte and the fourth byte record identity authentication data Authentication Data. A user may choose to add another line in the optional authentication part of the FD control packet.

It should be noted that, the mandatory part (mandatory part) and the optional authentication part of the BFD control packet shown in FIG. 6 and FIG. 7 belong to a conventional technology. For specific content, refer to detailed descriptions of the bidirectional forwarding detection protocol (RFC 5880). Details are not described herein. An innovation point of embodiments of this application is that an extended type length value (extended type length value, TLV) part is added to the BFD control packet shown in FIG. 6 and FIG. 7. The following describes the TLV part of the BFD control packet in detail with reference to the accompanying drawings.

### 3. Optional extended TLV part of the BFD control packet

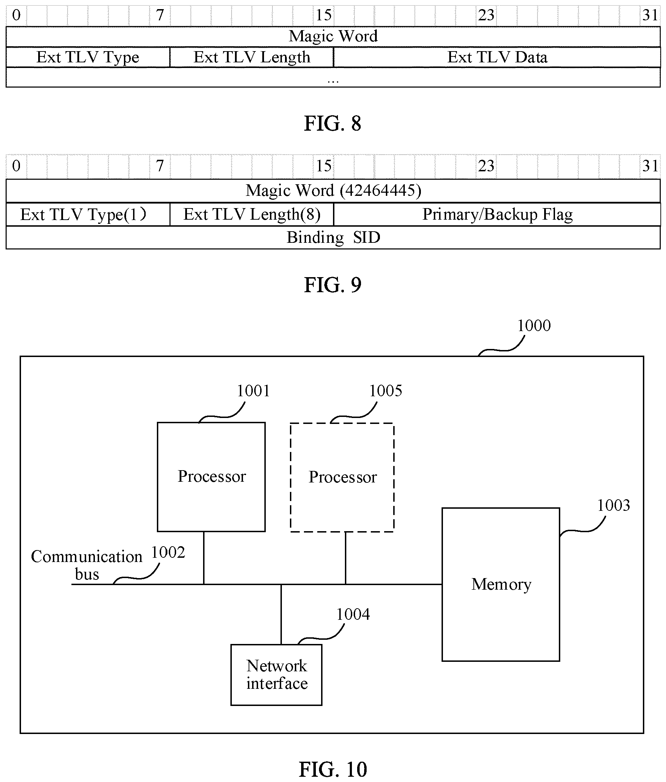

Refer to FIG. 8. The optional extended TLV part of the BFD control packet includes Magic Word, an extension type Ext TLV Type, an extension field length TLV Length, and extended TLV data content Ext TLV Data. Magic Word, Ext TLV Type, and TLV Length are all description information of the optional extended TLV part. Ext TLV Data records specific extended packet information, including a first tunnel identifier and a first path flag, so that the reflector device can determine a reverse channel based on the first tunnel identifier and the first path flag.

Further, for specific content of the Ext TLV Data part, refer to FIG. 9. As shown in FIG. 9, the content included in the optional extended TLV part of the BFD control packet is shown in Table 1.

**Table 1**

| Name | Length | Content |
|---|---|---|
| Magic Word | 32 bits | Magic Word is ASCI code (42464445) of BFDE, and identifies that the extended TLV exists. |
| Ext TLV Type | Eight bits | Extension type, where if a Type value is 1, it indicates that the TLV is for selecting a reverse path. |
| TLV Length | Six bits | Extension field length |
| TLV Data | Custom | TLV Data includes the first indication information described in the foregoing embodiments, where TLV Data specifically includes: a binding SID (four bytes) corresponding to a first tunnel + path flags. The path flags are identification information carried in the foregoing first indication information. The path flags include a primary flag and a backup flag. The primary flag Primary flag indicates a primary path, and the backup flag Backup flag indicates a backup path. For a specific implementation, refer to the foregoing descriptions of FIG. 2b. Details are not described herein again. (A length of a path flag part is 16 bits.) |

It should be noted that Table 1 provides a preferred implementation. A person skilled in the art may adjust specific data in Table 1 based on an actual requirement. This is not limited in embodiments of this application.

In conclusion, embodiments of this application provide a method for selecting a packet sending path. An initiator device generates a first packet; and the initiator device sends the first packet to a reflector device through a first path, where the first packet includes first indication information, the first indication information indicates the reflector device to select a path to send a second packet to the initiator device, and the second packet is a response packet of the first packet. Because the first packet sent by the initiator carries the first indication information indicating the first path, after obtaining the first packet, the reflector can obtain a reverse path based on the first indication information, to ensure that a same transmission path is for receiving and sending. This avoids false detection and improves detection accuracy. A BFD control packet is extended, to solve a problem of traffic interruption or false switching caused by false SBFD detection when an SBFD forward path is inconsistent with an SBFD reverse path. This is for quickly and accurately detecting whether a delay or fault occurs on a path.

It should be noted that the technical solutions provided in embodiments of this application are not limited to an SR scenario, and are applicable to a non-inter-area scenario, an E2E SRTE inter-area scenario, and a seamless SR scenario.

From a perspective of a hardware structure, the foregoing device management method may be implemented by a physical device, or may be jointly implemented by a plurality of physical devices, or may be implemented by a logical functional module inside a physical device. This is not specifically limited in embodiments of this application.

For example, the foregoing device management method may be implemented by a device in FIG. 10. FIG. 10 is a schematic diagram of a structure of a device 1000 according to an embodiment of this application. The device 1000 includes at least one processor 1001, a communication bus 1002, and at least one network interface 1004. Optionally, the device 1000 may further include a memory 1003.

The processor 1001 may be a general-purpose central processing unit (central processing unit, CPU), an application-specific integrated circuit (application-specific integrated circuit, ASIC), or one or more integrated circuits (integrated circuits, ICs) for controlling program execution of the solutions of this application. The processor may be configured to process a packet, to implement the methods for sending a packet provided in embodiments of this application.

The communication bus 1002 is configured to transmit information between the processor 1001, the network interface 1004, and the memory 1003.

The memory 1003 may be a read-only memory (read-only memory, ROM) or another type of static storage device that may store static information and instructions. The memory 1003 may alternatively be a random access memory (random access memory, RAM) or another type of dynamic storage device that may store information and instructions, or may be a compact disc read-only memory (compact disc read-only Memory, CD-ROM) or another optical disc storage, an optical disc storage (including a compact disc, a laser disc, an optical disc, a digital versatile disc, a Blu-ray disc, and the like), a disk storage medium or another magnetic storage device, or any other medium that can be configured to carry or store expected program code in a form of an instruction or a data structure and that can be accessed by a computer. However, the memory is not limited thereto. The memory 1003 may exist alone, and is connected to the processor 1001 through the communication bus 1002. The memory 1003 may alternatively be integrated with the processor 1001.

Optionally, the memory 1003 is configured to store program code or instructions for executing the solutions of this application, and the processor 1001 controls the execution. The processor 1001 is configured to execute the program code or the instructions stored in the memory 1003. The program code may include one or more software modules. Optionally, the processor 1001 may alternatively store the program code or the instructions for executing the solutions of this application. In this case, the processor 1001 does not need to read the program code or the instructions from the memory 1003.

The network interface 1004 may be an apparatus such as a transceiver, and is configured to communicate with another device or a communication network. The communication network may be an Ethernet, a radio access network (RAN), a wireless local area network (wireless local area networks, WLAN), or the like. In this embodiment of this application, the network interface 1004 may be configured to receive a packet sent by another node in a segment routing network, or may send a packet to another node in a segment routing network. The network interface 1004 may be an Ethernet (Ethernet) interface, a fast Ethernet (fast Ethernet, FE) interface, a gigabit Ethernet (gigabit Ethernet, GE) interface, or the like.

During specific implementation, in an embodiment, the device 1000 may include a plurality of processors, for example, the processor 1001 and a processor 405 shown in FIG. 10. Each of the processors may be a single-core (single-CPU) processor, or may be a multi-core (multi-CPU) processor. The processor herein may be one or more devices, circuits, and/or processing cores configured to process data (for example, computer program instructions).

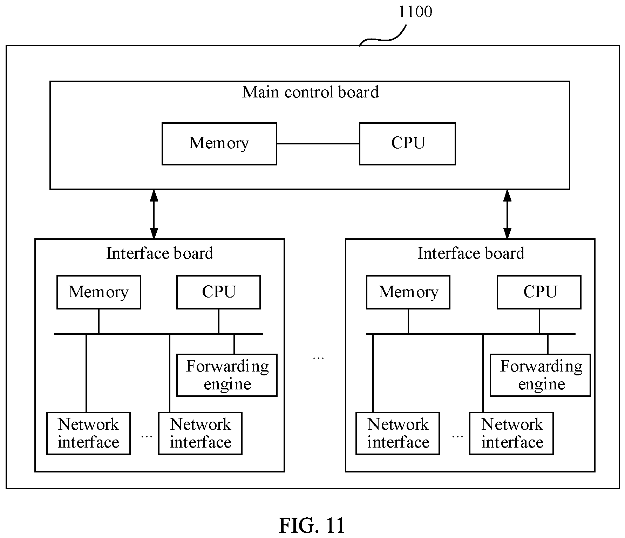

Further, FIG. 11 is a schematic diagram of a structure of a device 1100 according to an embodiment of this application. The device 1100 includes a main control board and one or more interface boards. The main control board is communicatively connected to the interface board. The main control board is also referred to as a main processing unit (main processing unit, MPU) or a route processor card (route processor card). The main control board includes a CPU and a memory, and is responsible for controlling and managing each component in the device 1100, including route computation, and device management and maintenance functions. The interface board is also referred to as a line processing unit (line processing unit, LPU) or a line card (line card), and is configured to receive and send packets. In some embodiments, the main control board communicates with the interface board through a bus, or the interface boards communicate with each other through a bus. In some embodiments, the interface boards communicate with each other through a switching board. In this case, the device 1100 also includes the switching board. The switching board is communicatively connected to the main control board and the interface boards, and is configured to forward data between the interface boards. The switching board may also be referred to as a switch fabric unit (switch fabric unit, SFU). The interface board includes a CPU, a memory, a forwarding engine, and an interface card (interface card, IC). The interface card may include one or more network interfaces. The network interface may be an Ethernet interface, an FE interface, a GE interface, or the like. The CPU is communicatively connected to the memory, the forwarding engine, and the interface card. The memory is configured to store a forwarding table. The forwarding engine is configured to forward a received packet based on the forwarding table stored in the memory. If a destination address of the received packet is an IP address of the device 1100, the forwarding engine sends the packet to the CPU of the main control board or the CPU of the interface board for processing. If a destination address of the received packet is not an IP address of the device 1100, the forwarding engine searches the forwarding table based on the destination address. If a next hop and an outbound interface that correspond to the destination address are found from the forwarding table, the forwarding engine forwards the packet to the outbound interface corresponding to the destination address. The forwarding engine may be a network processor (network processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU of the interface board. In some embodiments, the CPU may also perform functions of the forwarding engine, for example, implementing software forwarding based on a general-purpose CPU, so that no forwarding engine is required in the interface board. In some embodiments, the forwarding engine may be implemented by using an ASIC or a field programmable gate array (field programmable gate array, FPGA). In some embodiments, the memory that stores the forwarding table may alternatively be integrated into the forwarding engine, and is used as a part of the forwarding engine.

An embodiment of this application further provides a chip system, including a processor, where the processor is coupled to a memory. The memory is configured to store a program or instructions. When the program or the instructions are executed by the processor, the chip system is enabled to implement the methods according to any one of the foregoing embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (system on chip, SoC), a CPU, an NP, a digital signal processor (digital signal processor, DSP), a microcontroller (microcontroller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps in the methods disclosed with reference to embodiments of this application may be directly performed and completed by a hardware processor, or may be performed and completed by using a combination of hardware in the processor and a software module.

In embodiments of this application, functional unit division may be performed on the device based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that, in embodiments of this application, division into the units is an example, and is merely a logical function division. In actual implementation, another division manner may be used.

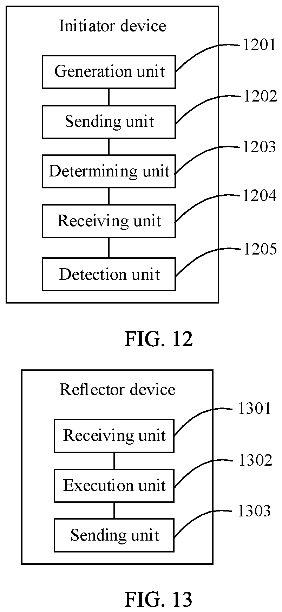

For example, when functional units are divided through integration, FIG. 12 is a schematic diagram of a structure of an initiator device according to an embodiment of this application.

As shown in FIG. 12, the initiator device provided in this embodiment of this application includes:
a generation unit 1201, where the generation unit 1201 is configured to generate a first packet; and
a sending unit 1202, where the sending unit 1202 is configured to send the first packet generated by the generation unit 1201 to a reflector device through a first path, where the first packet includes first indication information, and the first indication information indicates the reflector device to select a path to send a second packet to the initiator device.

Optionally, the first indication information includes first identification information; and
if the first identification information identifies that the first path is a primary path from the initiator device to the reflector device, the first indication information indicates the reflector device to select a primary path from the reflector device to the initiator device to send the second packet; or
if the first identification information identifies that the first path is a backup path from the initiator device to the reflector device, the first indication information indicates the reflector device to select a backup path from the reflector device to the initiator device to send the second packet.

Alternatively, the first indication information includes second identification information; and
the second identification information indicates the reflector device to select a primary path from the reflector device to the initiator device to forward the second packet; or
the second identifier indicates the reflector device to select a backup path from the reflector device to the initiator device to send the second packet.

Alternatively, the first indication information includes third identification information; the third identification information identifies the first path, and the first indication information indicates the reflector device to select a second path from the reflector device to the initiator device to send the second packet; and the first path and the second path are bidirectional co-routed paths.

Optionally, the first indication information further includes a binding segment identifier binding SID, and the binding SID is for directing the reflector to send the second packet to the initiator device.

Optionally, the first packet is a BFD packet or an SBFD packet.

Optionally, the first indication information is carried in a payload part of the BFD packet, or the first indication information is carried in a packet payload payload part of the SBFD packet.

Alternatively, the first indication information is carried in control packet extended Ext Data of the BFD packet or the SBFD packet.

Optionally, the device further includes:
a determining unit 1203, where the determining unit 1203 is configured to: when the sending unit 1202 does not receive the second packet after sending the first packet to the reflector device, determine that a fault occurs when a service packet is sent to the reflector device through the first path.

Optionally, the device further includes:
a receiving unit 1204, where the receiving unit 1204 is configured to receive the second packet sent by the reflector device; and
a detection unit 1205, where the detection unit 1205 is configured to detect, based on the second packet received by the receiving unit 1204, a transmission status of sending the service packet to the reflector device through the first path.

Optionally, the detection unit 1205 is further configured to:
record a first time point after the first packet is sent;
record a second time point at which the second packet is received; and
when it is determined that a difference between the first time point and the second time point is less than a threshold, determine that transmission quality of the first path for sending the service packet to the reflector device meets a service requirement; or
when it is determined that a difference between the first time point and the second time point is greater than a threshold, determine that transmission quality of the first path for sending the service packet to the reflector device does not meet a service requirement.

Optionally, the sending unit 1202 is further configured to:
when the detection unit 1205 determines that the fault occurs when the service packet is sent to the reflector device through the first path, or when the detection unit 1205 determines that transmission quality of the first path for sending the service packet to the reflector device does not meet the service requirement,
send a service packet to the reflector device through a third path, where the third path and the first path are different paths.

Optionally, the second packet is a response packet of the first packet, or the second packet is a loopback packet of the first packet.

FIG. 13 is a schematic diagram of a structure of a reflector device according to an embodiment of this application.

As shown in FIG. 13, the reflector device provided in this embodiment of this application includes:
a receiving unit 1301, where the receiving unit 1301 is configured to receive a first packet sent by an initiator device through a first path, and the first packet includes first indication information;
an execution unit 1302, where the execution unit 1302 is configured to select a target path based on an indication of the first indication information received by the receiving unit 1301; and
a sending unit 1303, where the sending unit 1303 is configured to send a second packet to the initiator device through the target path selected by the execution unit 1302.

Optionally, the first indication information includes first identification information, and the first identification information identifies that the first path is a primary path from the initiator device to the reflector device; and the execution unit 1302 is further configured to:
select a primary path from the reflector device to the initiator device as the target path based on the first identification information; or
the first identification information identifies that the first path is a backup path from the initiator device to the reflector device; and the execution unit 1302 is further configured to:
   select a backup path from the reflector device to the initiator device as the target path based on the first identification information.

Alternatively, the first indication information includes second identification information, and the second identification information indicates the reflector device to select a primary path or a backup path from the reflector device to the initiator device to forward the second packet; and the execution unit 1302 is further configured to:
select the primary path or the backup path from the reflector device to the initiator device as the target path based on the second identification information.

Alternatively, the first indication information includes third identification information, and the third identification information identifies the first path; and the execution unit 1302 is further configured to:
select a second path as the target path based on the third identification information, where the first path and the second path are bidirectional co-routed paths.

Optionally, the first indication information further includes a binding segment identifier binding SID, and the execution unit 1302 is further configured to:
determine a label stack of a corresponding selected path based on the binding SID; and
send the second packet based on the label stack, where a packet header of the second packet includes the label stack.

Optionally, the execution unit 1302 is further configured to:
determine a primary label stack in the binding segment identifier binding SID based on the first identification information, where the primary label stack is one of a plurality of label stacks in the binding SID, and the primary label stack includes an identifier ID of a routing node of the primary path.

Alternatively, the selecting a backup path from the reflector device to the initiator device as the target path based on the first identification information includes:
determining a backup label stack in the binding segment identifier binding SID based on the first identification information, where the backup label stack is one of a plurality of label stacks in the binding SID, and the backup label stack includes an identifier ID of a routing node of the backup path.

Optionally, the second packet is a response packet of the first packet, or the second packet is a loopback packet of the first packet.

An embodiment of this application further provides a computer-readable storage medium, including instructions. When the instructions are run on a computer, the computer is enabled to perform the methods in the foregoing embodiments.

In the specification, claims, and accompanying drawings of this application, the terms "first", "second", "third", "fourth", and the like are intended to distinguish between similar objects but do not necessarily indicate a specific order or sequence. It should be understood that data termed in such a way is interchangeable in proper circumstances so that embodiments described herein can be implemented in other orders than the order illustrated or described herein. In addition, the terms "include" and "have" and any other variants thereof are intended to cover non-exclusive inclusion. For example, a process, method, system, product, or device that includes a list of steps or units is not necessarily limited to those expressly listed steps or units, but may include other steps or units not expressly listed or inherent to the process, method, product, or device.

In this application, "at least one item (piece)" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In this application, it is considered that "A and/or B" includes only A, only B, and A and B.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical module division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be obtained based on actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, functions described in the present invention may be implemented by using hardware, software, firmware, or any combination thereof. When the functions are implemented by using the software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A method for selecting a packet sending path, comprising:
generating, by an initiator device, a first packet; and
sending, by the initiator device, the first packet to a reflector device through a first path, wherein the first packet comprises first indication information, and the first indication information indicates the reflector device to select a path to send a second packet to the initiator device.

2. The method according to claim 1, wherein the first indication information comprises first identification information; and
if the first identification information identifies that the first path is a primary path from the initiator device to the reflector device, the first indication information indicates the reflector device to select a primary path from the reflector device to the initiator device to send the second packet; or
if the first identification information identifies that the first path is a backup path from the initiator device to the reflector device, the first indication information indicates the reflector device to select a backup path from the reflector device to the initiator device to send the second packet.

3. The method according to claim 1, wherein the first indication information comprises second identification information; and
the second identification information indicates the reflector device to select a primary path from the reflector device to the initiator device to forward the second packet; or
the second identifier indicates the reflector device to select a backup path from the reflector device to the initiator device to send the second packet.

4. The method according to claim 1, wherein the first indication information comprises third identification information; the third identification information identifies the first path, and the first indication information indicates the reflector device to select a second path from the reflector device to the initiator device to send the second packet; and the first path and the second path are bidirectional co-routed paths.

5. The method according to any one of claims 1 to 4, wherein the first indication information further comprises a binding segment identifier binding SID, and the binding SID is for directing the reflector to send the second packet to the initiator device.

6. The method according to any one of claims 1 to 5, wherein the first packet is a BFD packet or an SBFD packet.

7. The method according to claim 6, wherein the first indication information is carried in a packet payload payload part of the BFD packet, or the first indication information is carried in a packet payload payload part of the SBFD packet.

8. The method according to any one of claims 1 to 7, wherein the second packet is a response packet of the first packet, or the second packet is a loopback packet of the first packet.

9. The method according to any one of claims 1 to 8, wherein the method further comprises:
when the initiator device does not receive the second packet after sending the first packet to the reflector device, determining, by the initiator device, that a fault occurs when a service packet is sent to the reflector device through the first path.

10. The method according to any one of claims 1 to 8, wherein the method further comprises:
receiving, by the initiator device, the second packet sent by the reflector device; and
detecting, by the initiator device based on the second packet, a transmission status of the first path for sending a service packet to the reflector device.

11. The method according to claim 10, wherein the method further comprises:
recording, by the initiator device, a first time point after sending the first packet;
recording, by the initiator device, a second time point at which the second packet is received; and
when determining that a difference between the first time point and the second time point is less than a threshold, determining, by the initiator device, that transmission quality of the first path for sending the service packet to the reflector device meets a service requirement; or
when determining that a difference between the first time point and the second time point is greater than a threshold, determining, by the initiator device, that transmission quality of the first path for sending the service packet to the reflector device does not meet a service requirement.

12. The method according to claim 9 or 11, wherein the method further comprises:
when the initiator device determines that the fault occurs when the service packet is sent to the reflector device through the first path, or when the initiator device determines that the transmission quality of the first path for sending the service packet to the reflector device does not meet the service requirement,
sending, by the initiator device, a service packet to the reflector device through a third path, wherein the third path and the first path are different paths.

13. A method for selecting a packet sending path, comprising:
receiving, by a reflector device, a first packet sent by an initiator device through a first path, wherein the first packet comprises first indication information;
selecting, by the reflector device, a target path based on an indication of the first indication information; and
sending, by the reflector device, a second packet to the initiator device through the target path.

14. The method according to claim 13, wherein the first indication information comprises first identification information, and the first identification information identifies that the first path is a primary path from the initiator device to the reflector device; and the selecting, by the reflector device, a target path based on an indication of the first indication information comprises:
selecting, by the reflector device, a primary path from the reflector device to the initiator device as the target path based on the first identification information; or
the first identification information identifies that the first path is a backup path from the initiator device to the reflector device; and the selecting, by the reflector device, a target path based on an indication of the first indication information, to send a second packet to the initiator device comprises:
selecting, by the reflector device, a backup path from the reflector device to the initiator device as the target path based on the first identification information.

15. The method according to claim 13, wherein the first indication information comprises second identification information, and the second identification information indicates the reflector device to select a primary path or a backup path from the reflector device to the initiator device to forward the second packet; and the selecting, by the reflector device, a target path based on an indication of the first indication information comprises:
selecting, by the reflector device, the primary path or the backup path from the reflector device to the initiator device as the target path based on the second identification information.

16. The method according to claim 13, wherein the first indication information comprises third identification information, and the third identification information identifies the first path; and the selecting, by the reflector device, a target path based on an indication of the first indication information comprises:
selecting, by the reflector device, a second path as the target path based on the third identification information, wherein the first path and the second path are bidirectional co-routed paths.

17. The method according to any one of claims 13 to 16, wherein the first indication information further comprises a binding segment identifier binding SID, and the method further comprises:
determining, by the reflector device, a label stack of a corresponding selected path based on the binding SID; and
sending, by the reflector device, the second packet based on the label stack, wherein a packet header of the second packet comprises the label stack.

18. The method according to claim 14, wherein the first indication information further comprises a binding segment identifier binding SID; and
the selecting, by the reflector device, a primary path from the reflector device to the initiator device as the target path based on the first identification information comprises:
determining, by the reflector device based on the first identification information, a primary label stack corresponding to the binding segment identifier binding SID, wherein the primary label stack is one of a plurality of label stacks corresponding to the binding SID; or
the selecting, by the reflector device, a backup path from the reflector device to the initiator device as the target path based on the first identification information comprises:
determining, by the reflector device based on the first identification information, a backup label stack corresponding to the binding segment identifier binding SID, wherein the backup label stack is one of a plurality of label stacks of the binding SID.

19. The method according to any one of claims 13 to 18, wherein the second packet is a response packet of the first packet, or the second packet is a loopback packet of the first packet.

20. An initiator device, comprising:
a generation unit, configured to generate a first packet; and
a sending unit, configured to send the first packet generated by the generation unit to a reflector device through a first path, wherein the first packet comprises first indication information, and the first indication information indicates the reflector device to select a path to send a second packet to the initiator device.

21. The device according to claim 20, wherein the first indication information comprises first identification information; and
if the first identification information identifies that the first path is a primary path from the initiator device to the reflector device, the first indication information indicates the reflector device to select a primary path from the reflector device to the initiator device to send the second packet; or
if the first identification information identifies that the first path is a backup path from the initiator device to the reflector device, the first indication information indicates the reflector device to select a backup path from the reflector device to the initiator device to send the second packet.

22. The device according to claim 20, wherein the first indication information comprises second identification information; and
the second identification information indicates the reflector device to select a primary path from the reflector device to the initiator device to forward the second packet; or
the second identifier indicates the reflector device to select a backup path from the reflector device to the initiator device to send the second packet.

23. The device according to claim 20, wherein the first indication information comprises third identification information; the third identification information identifies the first path, and the first indication information indicates the reflector device to select a second path from the reflector device to the initiator device to send the second packet; and the first path and the second path are bidirectional co-routed paths.

24. The device according to any one of claims 20 to 23, wherein the device further comprises:
a receiving unit, configured to receive the second packet sent by the reflector device; and
a detection unit, configured to detect, based on the second packet received by the receiving unit, a transmission status of a service packet sent to the reflector device through the first path.

25. A reflector device, comprising:
a receiving unit, configured to receive a first packet sent by an initiator device through a first path, wherein the first packet comprises first indication information;
an execution unit, configured to select a target path based on an indication of the first indication information received by the receiving unit; and
a sending unit, configured to send a second packet to the initiator device through the target path selected by the execution unit.

26. The device according to claim 25, wherein the first indication information comprises first identification information, and the first identification information identifies that the first path is a primary path from the initiator device to the reflector device; and the execution unit is further configured to:
select a primary path from the reflector device to the initiator device as the target path based on the first identification information; or
the first identification information identifies that the first path is a backup path from the initiator device to the reflector device; and the execution unit is further configured to:
select a backup path from the reflector device to the initiator device as the target path based on the first identification information.

27. The device according to claim 25, wherein the first indication information comprises second identification information, and the second identification information indicates the reflector device to select a primary path or a backup path from the reflector device to the initiator device to forward the second packet; and the execution unit is further configured to:
select the primary path or the backup path from the reflector device to the initiator device as the target path based on the second identification information.

28. The device according to claim 25, wherein the first indication information comprises third identification information, and the third identification information identifies the first path; and the execution unit is further configured to:
select a second path as the target path based on the third identification information, wherein the first path and the second path are bidirectional co-routed paths.

29. A computer-readable storage medium, comprising instructions, wherein when the instructions are run on a computer device, the computer device is enabled to perform the method according to any one of claims 1 to 19.
